# EUROPEAN PATENT SPECIFICATION

(11) **EP 2 400 578 B1**
(45) Date of publication and mention of the grant of the patent: **03.04.2013**
(21) Application number: 10178235.7
(22) Date of filing: 22.09.2010
(51) Int. Cl.: H01M 2/04, H01M 2/22, H01M 10/04, H01M 2/02

(54) **Secondary Battery**
Sekundärbatterie
Batterie secondaire

(30) Priority: 25.06.2010 US 358506 P
(43) Date of publication of application: 28.12.2011
(73) Proprietor: Samsung SDI Co., Ltd., Gyeonggi-do (KR)
(72) Inventor: Uh, Hwa-Il, Gyeonggi-do (KR); Kim, Kyoung-Han, Gyeonggi-do (KR)
(74) Representative: Grey, Ian Michael

(56) References cited:
- JP-A- 2009 259 651
- US-A1- 2006 057 459

## Description

The invention relates to a secondary battery, and more particularly, to a secondary battery having a fixed terminal plate.

In general, rectangular lithium secondary batteries are formed by accommodating an electrode assembly in a can, in which the electrode assembly is comprised of a negative plate having a negative tab, a positive plate having a positive tab, and a separator interposed therebetween.

Further, the top of the can is sealed with a cap assembly. The terminal plate of the cap assembly is welded to any one of the negative tab and the positive tab drawn out of the electrode assembly and electrically connected thereto.

In this configuration, the terminal plate may be separated from the bottom of an insulating plate, because a member for fixing the terminal plate is not provided. Therefore, it is difficult to firmly weld the terminal plate to any one of the negative tab and the positive tab, because the terminal plate is not fixed.

The present invention seeks to provide an insulating plate positioned between a cap plate and a terminal plate with coupling means to fix the terminal plate to the insulating plate and to provide a secondary battery that can prevent the terminal plate from becoming detached from the insulating plate.

It is known from US2006/057459A1 to provide a secondary battery comprising a cap assembly including a cap plate, a terminal plate and an insulating plate disposed therebetween, the insulating plate comprises at least one coupling member to removably couple the terminal plate to a surface of the insulating plate the or each coupling member comprises a hook element extending from a periphery of the surface of the insulating plate that overhangs said surface, the terminal plate being positioned against said surface and engaged with said hook element(s) to couple the terminal plate to the surface of the insulating plate.

A secondary battery according to the present invention is characterised in the or each hook element is resilient and has an upper surface that extends at an angle relative to the surface of the insulating plate such that the hook deforms outwardly in response to the application of pressure of the terminal plate against said upper surface so that the terminal plate is a snap-fit into the hook element.

The insulating plate may comprise a peripheral wall extending from its surface to form a recess, the terminal plate being dimensioned so that it fits within said recess and is surrounded by said peripheral wall. In this case, the or each hook element may depend from said peripheral wall. The peripheral wall may extend from a whole or part of the periphery of the insulating plate.

The insulating plate may be generally rectangular and be defined by two parallel short sides and two parallel longer sides. The at least one hook element may then depend from one of the parallel short sides or from each of the parallel longer sides.

In some embodiments, the insulating plate includes a hole adjacent to one of the parallel short sides to receive an electrode terminal therethrough and the or each hook element extending from the other parallel short side and/or one or both of the parallel long sides spaced from said hole.

In some embodiments, the peripheral wall may depend only from the two parallel short sides of the insulating plate or from the two parallel long sides of the insulating plate.

Preferably, the secondary battery includes an electrode assembly including a pair of electrode tabs, one of said tabs being electrically connected to said terminal plate coupled to said insulating plate, the cap assembly including an electrode terminal which extends through an aperture in the terminal plate, the insulating plate and the cap plate so that the terminal plate electrically connects the electrode tab to the electrode terminal.

The secondary battery may include an insulating gasket to insulate the electrode terminal from the cap plate.

In another embodiment, a recess may be formed in the periphery of the terminal plate corresponding to the position of a hook element so that the hook element engages in said recess when the terminal plate is coupled to said insulating plate.

Further, a fuse may be further formed in one region of the terminal plate.

As described above, according to the present invention, it is possible to improve weldability between the electrode tabs drawn out of the electrode assembly and the terminal plate, by retaining the terminal plate with the coupling means of the insulating plate such that the end of the terminal plate is prevented from becoming detached.

The accompanying drawings, together with the specification, illustrate exemplary embodiments of the present invention, and, together with the description, serve to explain the principles of the present invention.
FIG. 1 is an exploded perspective view of a rectangular secondary battery according to a first embodiment of the present invention;
FIG. 2 is a partial cross-sectional view of a secondary battery equipped with an insulating plate having a fixed mean according to the first embodiment of the present invention;
FIG. 3 is a bottom view of the insulating plate having the fixed means according to the first embodiment of the present invention;
FIG. 4 is a bottom view of an insulating plate having a fixed means according to a second embodiment of the present invention;
FIG. 5 is a bottom view of an insulating plate having a fixed means according to a third embodiment of the present invention;
FIG. 6 is a bottom view of an insulating plate having a fixed means according to a fourth embodiment of the present invention;
FIG. 7 is a bottom view of an insulating plate having a fixed means according to a fifth embodiment of the present invention;
FIG. 8 is a partial cross-sectional view of a secondary battery equipped with an insulating plate having a fixed mean according to a sixth embodiment of the present invention;
FIG. 9 is a partial cross-sectional view of a secondary battery equipped with an insulating plate having a fixed mean according to a seventh embodiment of the present invention; and
FIG. 10 is a bottom perspective view showing the terminal plate of FIG. 9.

Embodiments according to the present invention are described hereafter in detail with reference to the drawings.

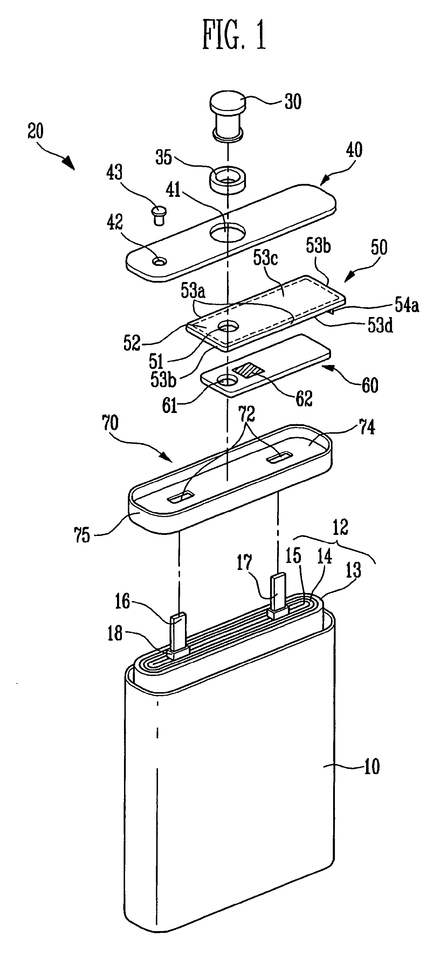

Referring to FIG. 1, a secondary battery according to the first embodiment of the present invention includes: a can 10 having an opening at one side and accommodating an electrode assembly 12 and a can assembly 20 sealing the opening of the can 10. Further, the secondary battery includes an insulating case 70 positioned between the electrode assembly 12 and the can assembly 20 and placed on upper portion of the can 10.

Further, the can assembly 20 further includes coupling means in the form of a hook-shaped element 54a formed on the bottom of an insulating plate 50 positioned between a cap plate 40 and a terminal plate 60. In this configuration, the hook-shaped element 54a prevent the terminal plate 60 from coming undone by closely fixing the terminal plate 60 to the insulating plate 50.

The insulating plate 50 has a pair of long-sided surfaces 53a facing each other, a pair of short-sided surfaces 53b connecting the ends of the long-sided surfaces 53a, and upper and lower surface 53c, 53d. A receipted space or recess 52 where the terminal plate 60 is inserted is formed on the bottom of the insulating plate 50. Further, the hook-shaped element 54a is formed at the lower end of a side of the receipted space 52.

In this configuration, a second terminal hole 51 where an electrode terminal 30 is inserted is formed at a side of the insulating plate 50. Further, the coupling means 54a may be formed at the lower end of at least any one of the sides of the receipted space 52, at the other side of the insulating plate 50. The electrode terminal 30 couples the insulating plate 50 to the cap plate 40. Although the electrode terminal 30 also couples the terminal plate 60 to the insulating plate and to the cap plate, it only couples one end of the terminal plate 60. Therefore, the coupling means 54a provides additional coupling to prevent detachment of the terminal plate from the insulating plate.

For the convenience of description, the side at the long-sided surfaces 53a of the insulating plate 50 is referred to as a 'long side wall' and the side at the short-sided surfaces 53b of the insulating plate 50 is referred to as a 'short side wall'.

The coupling means 54a according to the first embodiment of the present invention is formed at the lower end of the short side wall at the other side of the insulating plate 50. That is, the coupling means 54a has a hook shape protruding inside the insulating plate 50 so as to overhang the surface of the insulating plate 50, from a region of the lower end of the short side wall. Accordingly, thee terminal plate 60 is attached by the coupling means 54a in close contact with the receipted space 52 of the insulating plate 50.

In this configuration, a fuse 62 may be further provided on the top of the terminal plate 60 and the length of the terminal plate 60 is increased by providing the fuse 62. Therefore, the end of the terminal plate 60 contacting the receipted space 52 of the insulating plate 50 comes undone as much as the increase of the length of the terminal plate, but this can be prevented by the coupling means 54a.

The configuration of the rectangular secondary battery is described hereafter in detail.

First, the electrode assembly 12 is formed by winding a negative plate 15 and a positive plate 13 with a separator 14 therebetween. A negative tab 16 is connected to the negative plate 15, protruding upward from the electrode assembly 12, and a positive tab 17 is connected to the positive plate 13, protruding upward from the electrode assembly 12. The negative tab 16 and the positive tab 17 are spaced from each other at a predetermined distance and electrically connected in the electrode assembly 12.

Further, a lamination tape 18 is wound at the portion where the negative tab 16 and the positive tab 17 are drawn from the electrode assembly 12. The lamination tape 18 blocks heat generated from the negative plate 16 or the positive plate 17. Further, the lamination plate 18 prevents the electrode plate 12 from being pressed by the edges of the negative tab 16 and the positive tab 17.

In this configuration, the negative tab 16 and the positive tab 17 are electrically connected with the negative plate 15 and the positive plate 13 of the electrode assembly, respectively, and drawn out to the opening of the can 10. For this configuration, the negative tab 16 and the positive tab 17 are electrically connected with the can or the terminal plate 60 through lead-through holes 72 of an insulating case 70 fixed to the upper portion of the electrode assembly 12 in the can 10.

The negative plate 15 and the positive plate 13 are formed by dry coating aslurry on a thin aluminum layer and a thin copper layer, respectively. The slurry contains the active substances of the negative plate 15 and the positive plate 13 and a fixing agent bonding the active substances to the metal layer. A lithium-containing oxide is generally used as the negative active substance in lithium secondary batteries. Further, although the positive active substance may be any one of hard carbon, soft carbon, graphite, and carbon substances, the present invention is not limited to those lithium secondary batteries.

The can 10 accommodates the electrode assembly through the opening and the horizontal cross section of the can 10 is formed in a rectangle with the corners rounded. The horizontal cross-sectional shape of the can 10 is not limited to the above, and though not shown, the horizontal cross-sectional shape of the can 10 may be a rectangle or an ellipse. The can 10 may be preferably made of aluminum that is light and has tensility or an aluminum alloy. Further, the can 10 may be manufactured with easy by deep drawing.

The cap assembly 20 includes the cap plate 40, an electrode terminal 30, the insulating plate 50, the terminal plate 60, and a gasket 35. The cap plate 40 can define one side of the can 10 by sealing the opening of the can 10 when the cap assembly 20 and the can 10 are combined. For this configuration, the cap plate 40 may be attached to the opening of the can 10 by welding etc. Further, the cap plate 40 is electrically connected with any one of thee negative tab 16 and the positive tab 17 drawn out through the lead-through holes 72 of the insulating case 70. Further, the cap plate 40 has a first terminal hole 41 for combination with a gasket 35 and an electrolyte inlet 42 for injecting an electrolyte. The electrolyte inlet 42 formed in the cap plate 40 is used as a channel for injecting an electrolyte into the can 10. Further, the electrolyte inlet 42 is sealed with a cap 43 after the electrolyte is injected.

The gasket 35 is provided to ensure insulation between the electrode terminal 30 and the cap plate 40. A center terminal hole 36 is formed through the gasket 35 for combination with the electrode terminal 30 and the electrode terminal 30 is combined with the gasket 35 through the center terminal hole 36.

Further, the insulating plate 50 described above is interposed between the cap plate 40 and the terminal plate 60 for insulation. Further, a second terminal hole 51 where the electrode terminal 30 passes is formed through the insulating plate 50. Further, the terminal plate 60 is electrically connected with the electrode terminal 30 by the third terminal hole 61. Further, the terminal plate 61 is electrically connected with the other one of the negative tab 16 and the positive tab 17 which is not connected with the cap plate 40. That is, when the cap plate 40 is electrically connected with the negative tab 16, the terminal plate 60 is connected with the positive tab 17 and accordingly, electrical connection between the electrode terminal 30 and the positive tab 17 can be achieved.

The insulating case 70 is positioned between the electrode assembly 12 and the cap assembly 20 for electric insulation, and in detail, it is kept inserted in the upper portion of the can 10. The insulating case 70 is generally made of hard plastic resin having excellent electric insulation. Therefore, when the insulating case 70 is inserted in the can 10, it is not substantially deformed by the electrolyte and it is easy to ensure insulation between the electrode assembly 12 and the cap assembly 20.

As described above, when the insulating case 70 is made of hard plastic resin, it is difficult to be combined with the can 10 due to small elasticity. For removing this problem, the insulating case 70 may be composed of a base 74 and a support 75 to be stably combined with the can 10. In this configuration, the base 74 is the bottom of the insulating case 70 and the support 75 is the outer side of the insulating case 70.

The base 74 of the insulating case 70 is formed of a plate having an uniform thickness and has a shape similar to the horizontal cross-sectional shape of the can 10, particularly the cross-sectional shape of the other space except for the space where the electrode assembly 12 is accommodated. Further, it is preferable that the base 74 of the insulating case 70 is a little larger than the cross section of the other space for press-fitting in the can 10. The electrolyte inlet (not shown) and the lead-through holes 72 are formed through the insulating case 70.

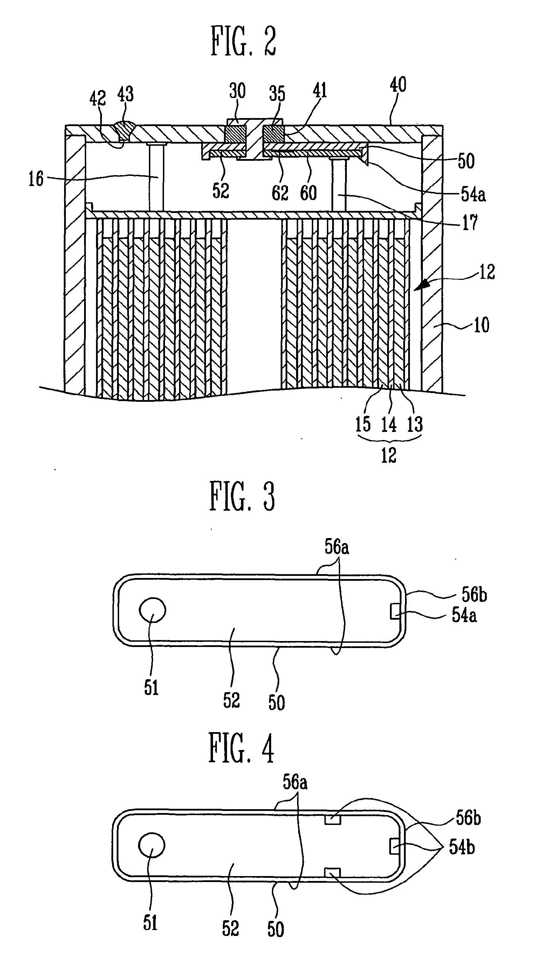

FIG. 2 is a partial cross-sectional view of a secondary battery equipped with the insulating plate having the coupling means according to the first embodiment of the present invention and FIG. 3 is a bottom view of an insulating plate having the coupling means according to the first embodiment of the present invention.

Referring to FIGS. 2 and 3, the insulating plate 50 according to the first embodiment of the present invention is positioned between the cap plate 40 and the terminal plate 60, and has the receipted space 52 on the bottom to accommodate the terminal plate 60. Further, the coupling means 54a is formed opposite to the side of the insulating plate 50 where the second terminal hole 51 (see FIG. 1) is formed, that is, on the side wall at the other side of the insulating plate 50. More preferably, the coupling means 54a is formed at the lower end of the short side wall 56a at the other side of the insulating plate 50.

The bottom of the coupling means 54a may be inclined upward to the inside of the insulating plate 50. Accordingly, the end of the terminal plate 60 can be seated in the receipted space 52 without being locked to the bottom of the coupling means 54a, when the terminal plate 60 is press-fitted in the receipted space 52. Further, the elasticity or resiliency of the coupling means 54a can be improved by this structure.

As described above, the end of the terminal plate 60 of which the length is increased by the fuse 62 (see FIG. 1) can be easily fixed to the receipted space 52 of the insulating plate 50 by the coupling means 54a. Therefore, it is possible to improve weldability between the terminal plate 60 and the positive tab 17 electrically and physically connected with the terminal plate 60.

Although one coupling means 54a is formed at the lower end of the short side wall 56b at the other side of the insulating plate 50 in the first embodiment of the present invention, more coupling means may be formed.

FIG. 4 is a bottom view of an insulating plate having coupling means according to the second embodiment of the present invention.

Referring to FIG. 4, the receipted space 52 where the terminal plate 60 (see FIG. 1) is formed on the bottom of the insulating plate 50. In this configuration, the receipted space 52 is slightly larger than the terminal plate 60 while covering the top and all the sides of the terminal plate 60. Further, the coupling means 54b are formed at the lower ends of a pair of long side walls 56a and one short side wall 56b at the other side of the insulating plate 50.

The end of the terminal plate 60 is fixed at three sides by the coupling means 54b, such that it is possible to firmly fix the terminal plate 60 to the receipted space 52 (see FIG. 1) of the insulating plate 50.

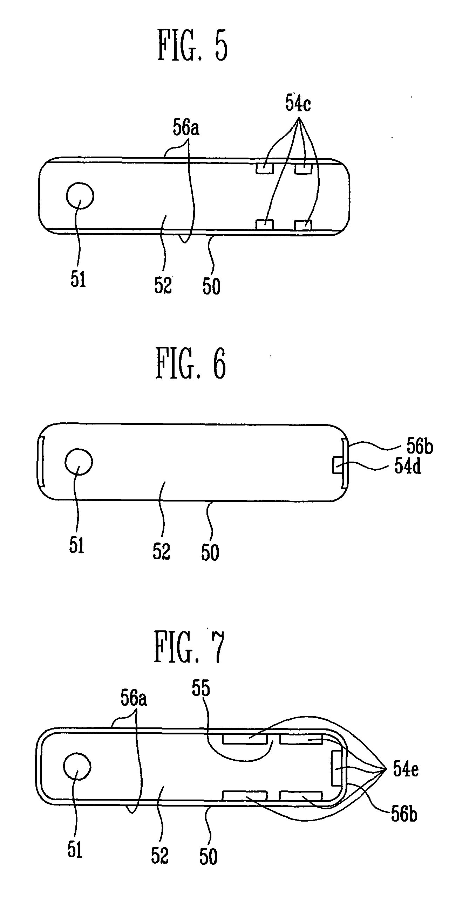

FIG. 5 is a bottom view of an insulating plate having a coupling means according to the third embodiment of the present invention.

Referring to FIG. 5, a receipted space 52 is formed on the bottom of the insulating plate 50 to cover the top of the terminal plate 60 and only a pair of long side surfaces. That is, the receipted space 52 has only a pair of long side surfaces 56a.

Accordingly, two coupling means 54c fixing the end of the terminal plate 60 may be formed at the lower ends of the pair of long side walls 56a at the other side of the insulating plate 50, respectively. In this configuration, it is possible to more firmly fix the terminal plate 60, as compared with when one coupling means 54c is formed at one side.

FIG. 6 is a bottom view of an insulating plate having a coupling means according to a fourth embodiment of the present invention.

Referring to FIG. 6, on the contrary to the third embodiment, a receipted space 52 is formed to cover the top of the terminal plate 60 (see FIG. 1) and only a pair of short side surfaces in the fourth embodiment of the present invention. That is, the receipted space 52 has only a pair of short side walls 56b.

Therefore, a coupling means 54b may be formed in a hook shape protruding from the bottom of one short side wall 56b at the other side of the insulating plate 50.

FIG. 7 is a bottom view of an insulating plate having a coupling means according to a fifth embodiment of the present invention.

Referring to FIG. 7, a receipted space 52 formed on the bottom of the insulating plate 50 covers the top of the terminal plate 60 (see FIG. 1) and all of the sides. Further, the coupling means 54e are formed at a pair of long side walls 56a and one short side wall 56b at the other side of the insulating plate 50.

Unlike the embodiments described above, the coupling means 54e according to the fifth embodiment of the present invention is formed long along the short side wall 56b. Further, the coupling means 54e is formed long with a space 55 along a long side wall 56a, except for the ends of a pair of long side walls 56a contacting the short side wall 56b.

Similar to the second embodiment of the present invention, since the end of the terminal plate 60 is fixed at three sides by the coupling means 54e, it is possible to more firmly fix the terminal plate 60.

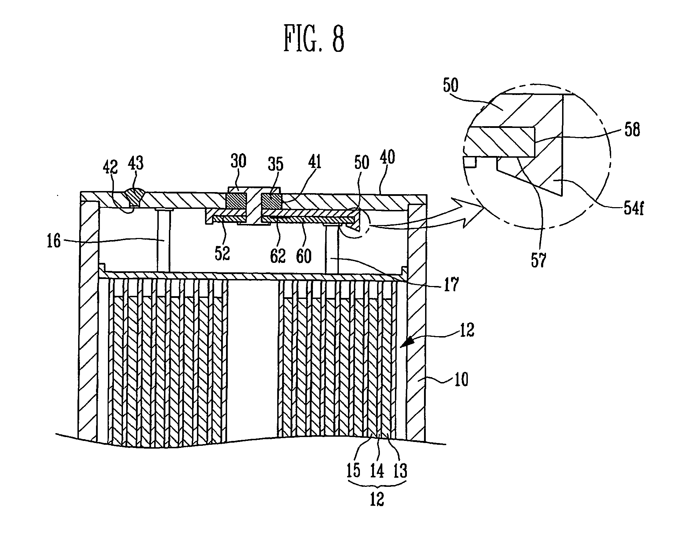

FIG. 8 is a partial cross-sectional view of a secondary battery equipped with an insulating plate having a fixed mean according to a sixth embodiment of the present invention.

Referring to FIG. 8, a support 57 extending inside the insulating plate 50 is formed at a predetermined region of the lower end of the short side wall of the insulating plate 50. That is, the support 57 is formed to support the bottom of the lower end of the terminal plate 60. A guide groove 58 can be formed on the side of the short side wall of the insulating plate 50 by forming the support 57. In this configuration, the guide groove 58 is a space surrounded by the receipted space 52 of the insulating plate 50 and the support 57.

Further, a coupling means 54f having a hook shape protruding inside the insulating plate 50 is formed on the bottom of the support 57. In this configuration, the support 57 of the insulating plate 50 and the coupling means 54f may be made of an elastic material in order not to interfere with fastening the terminal plate 60. Further, since the coupling means 54f have a hook shape, it is possible to easily insert the terminal plate 60 into the guide groove 58. As described above, as the end of the terminal plate 60 is fitted in the guide groove 58, it is possible to prevent the end of the terminal plate 60 from coming undone.

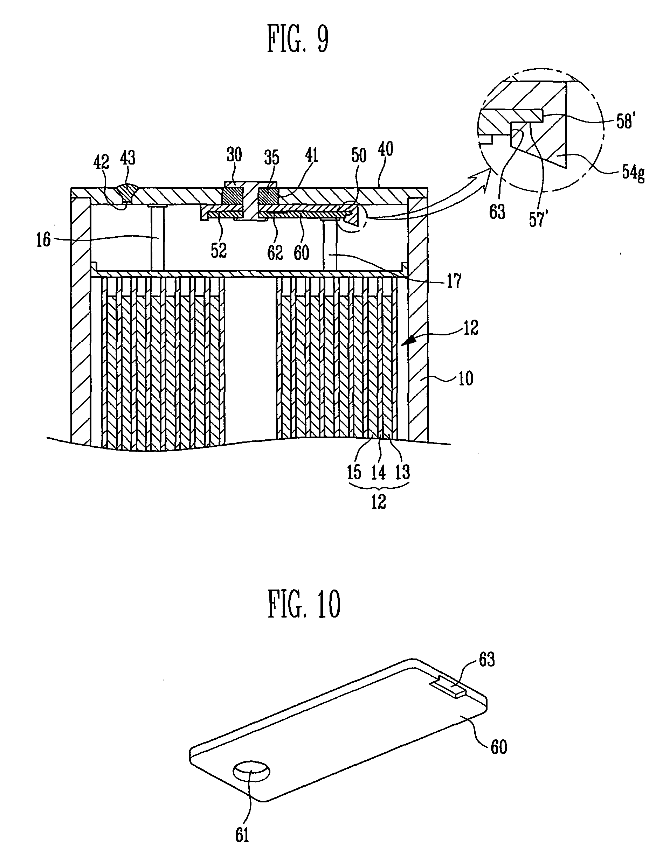

FIG. 9 is a partial cross-sectional view of a secondary battery equipped with an insulating plate having a coupling means according to a seventh embodiment and FIG. 10 is a bottom perspective view showing the terminal plate of FIG. 9.

Referring to FIGS. 9 and 10, a support 57' extending inside the insulating plate 50 is further formed, as in the sixth embodiment of the present invention. In this configuration, the thickness of the space which is formed by the support 57' and where the end of the terminal plate 60 is placed is smaller than the terminal plate 60. Further, a locking groove 63 may be formed on the bottom of the terminal plate 60 to have a depth as much as the difference of the thicknesses. Further, a coupling means 54g having a hook shape protruding inside the insulating plate 50 may be formed on the bottom of the support 57'.

It is possible to prevent the terminal plate 60 from horizontally moving, by forming the locking groove 63 on the bottom of the terminal plate 60 which contacts the support 57' of the insulating plate 50. Further, it is possible to more firmly retain the terminal plate 60 up/down and left/right.

Although a secondary battery including the terminal plate of which the length is increased by forming the fuse is described in the embodiments of the present invention, the present invention can be applied to secondary batteries including a terminal plate without a fuse.

Although the present invention was described in detail with reference to the preferred embodiments, it should be understood that the embodiments are provided only for explaining the present invention and the present invention is not limited thereto. Further, it will be understood by those skilled in the art that the present invention may be modified in various ways within the scope of the present claims.

## Claims

1. A secondary battery comprising a cap assembly (20) including a cap plate (40), a terminal plate (60) and an insulating plate (50) disposed therebetween, the insulating plate (50) comprises at least one coupling member (54a) to removably couple the terminal plate (60) to a surface (53d) of the insulating plate (50) the or each coupling member comprises a hook element (54a) extending from a periphery of the surface (53d) of the insulating plate (50) that overhangs said surface, the terminal plate (60) being positioned against said surface (53d) and engaged with said hook element(s) (54a) to couple the terminal plate (60) to the surface of the insulating plate (50) **characterised in that** the or each hook element (54a) is resilient and has an upper surface that extends at an angle relative to the surface of the insulating plate (50) such that the hook (54f) deforms outwardly in response to the application of pressure of the terminal plate (60) against said upper surface so that the terminal plate is a snap-fit into the hook element (54a).

2. A secondary battery according to claim 1, wherein the insulating plate comprises a peripheral wall extending from its surface to form a recess, the terminal plate being dimensioned so that it fits within said recess and is surrounded by said peripheral wall.

3. A secondary battery according to claim 2, wherein the or each hook element extends from said peripheral wall.

4. A secondary battery according to claim 2 or claim 3, wherein the insulating plate is generally rectangular and is defined by two parallel short sides and two parallel longer sides.

5. A secondary battery according to claim 4, wherein at least one hook element extends from one of the parallel short sides.

6. A secondary battery according to claim 4 or 5, wherein at least one hook element extends from each of the parallel longer sides.

7. A secondary battery according to claim 5 or claim 6, wherein the insulating plate includes a hole adjacent to one of the parallel short sides to receive an electrode terminal therethrough and the or each hook element extends from the other parallel short side and/or one or both of the parallel long sides spaced from said hole.

8. A secondary battery according to any of claims 2 to 7, wherein the peripheral wall extends from a portion of the surface of the insulating plate.

9. A secondary battery according to claim 8, when dependent on claim 4, wherein the peripheral wall extends only from the two parallel short sides of the insulating plate or from the two parallel long sides of the insulating plate.

10. A secondary battery according to any of claims 2 to 9, wherein the or each hook element overhangs the surface of the insulating plate so as to form a guide groove which receives the terminal plate.

11. A secondary battery according to any preceding claim, comprising an electrode assembly including a pair of electrode tabs, one of said tabs being electrically connected to said terminal plate coupled to said insulating plate, the cap assembly including an electrode terminal which extends through an aperture in the terminal plate, the insulating plate and the cap plate so that the terminal plate electrically connects the electrode tab to the electrode terminal.

12. A secondary battery according to claim 11, including an insulating gasket to insulate the electrode terminal from the cap plate.

13. A secondary battery according to any preceding claim, wherein a recess is formed in the periphery of the terminal plate corresponding to the position of a hook element so that the hook element engages in said recess when the terminal plate is coupled to said insulating plate.

## Patentansprüche

1. Akkumulator, der eine Deckeleinheit (20) einschließlich einer Deckelplatte (40), eine Anschlussplatte (60) und eine Isolierplatte (50) umfasst, die dazwischen angeordnet ist, wobei die Isolierplatte (50) mindestens ein Verbindungselement (54a) zum lösbaren Verbinden der Anschlussplatte (60) mit einer Fläche (53d) der Isolierplatte (50) umfasst, wobei das oder jedes Verbindungselement ein Hakenelement (54a) umfasst, welches sich von einer Peripherie der Fläche (53d) der Isolierplatte (50) aus erstreckt, die über die Fläche hinaus vorsteht, wobei die Anschlussplatte (60) an die Fläche (53d) angelegt und im Eingriff mit dem/den Hakenelement(en) (54a) ist, um die Anschlussplatte (60) mit der Fläche der Isolierplatte (50) zu verbinden, **dadurch gekennzeichnet, dass** das oder jedes Hakenelement (54a) elastisch ist und eine obere Fläche hat, die sich unter einem Winkel relativ zur Fläche der Isolierplatte (50) derart erstreckt, dass der Haken (54f) sich nach außen als Reaktion auf die Anwendung von Druck der Anschlussplatte (60) gegen die obere Fläche verformt, sodass die Anschlussplatte in das Hakenelement (54a) einrastet.

2. Akkumulator nach Anspruch 1, wobei die Isolierplatte eine periphere Wand umfasst, die sich von ihrer Oberfläche aus erstreckt, um eine Vertiefung zu bilden, wobei die Anschlussplatte so bemessen ist, dass sie in die Vertiefung passt und von der peripheren Wand umgeben ist.

3. Akkumulator nach Anspruch 2, wobei das oder jedes Hakenelement sich von der peripheren Wand aus erstreckt.

4. Akkumulator nach Anspruch 2 oder 3, wobei die Isolierplatte im Allgemeinen rechteckig ist und durch zwei parallele kurze Seiten und zwei parallele längere Seiten definiert ist.

5. Akkumulator nach Anspruch 4, wobei mindestens ein Hakenelement sich von einer der parallelen kurzen Seiten aus erstreckt.

6. Akkumulator nach Anspruch 4 oder 5, wobei mindestens ein Hakenelement sich von jeder der parallelen längeren Seiten aus erstreckt.

7. Akkumulator nach Anspruch 5 oder 6, wobei die Isolierplatte ein Loch angrenzend an eine der parallelen kurzen Seiten umfasst, um eine Elektrodenklemme durch dasselbe aufzunehmen, und das oder jedes Hakenelement sich von der anderen parallelen kurzen Seite und/oder einer oder beiden parallelen langen Seiten aus erstreckt, die einen Abstand vom Loch haben.

8. Akkumulator nach einem der Ansprüche 2 bis 7, wobei die periphere Wand sich von einem Teil der Fläche der Isolierplatte aus erstreckt.

9. Akkumulator nach Anspruch 8, wenn dieser von Anspruch 4 abhängt, wobei die periphere Wand sich nur von den zwei parallelen kurzen Seiten der Isolierplatte oder von den zwei parallelen langen Seiten der Isolierplatte aus erstreckt.

10. Akkumulator nach einem der Ansprüche 2 bis 9, wobei das oder jedes Hakenelement über die Fläche der Isolierplatte hinaus vorragt, um so eine Führungsnut zu bilden, die die Anschlussplatte aufnimmt.

11. Akkumulator nach einem der vorherigen Ansprüche, der eine Elektrodengruppe umfasst, die ein Paar von Elektrodenstreifen umfasst, wobei einer der Streifen elektrisch mit der Isolierplatte verbunden ist, wobei die Deckeleinheit eine Elektrodenklemme umfasst, die sich durch eine Öffnung in der Anschlussplatte, die Isolierplatte und die Deckelplatte erstreckt, sodass die Anschlussplatte den Elektrodenstreifen elektrisch mit dem Elektrodenanschluss verbindet.

12. Akkumulator nach Anspruch 11, der eine Isolierdichtung umfasst, um den Elektrodenanschluss von der Deckelplatte zu isolieren.

13. Akkumulator nach einem der vorherigen Ansprüche, wobei eine Vertiefung in der Peripherie der Anschlussplatte gebildet ist, die der Position eines Hakenelementes entspricht, sodass das Hakenelement in die Vertiefung eingreift, wenn die Anschlussplatte mit der Isolierplatte verbunden ist.

## Revendications

1. Batterie rechargeable comprenant un ensemble formant capuchon (20) comportant une plaque de capuchon (40), une plaque de borne (60) et une plaque isolante (50) disposée entre ces dernières, la plaque isolante (50) comprend au moins un élément de couplage (54a) pour coupler de manière amovible la plaque de borne (60) à une surface (53d) de la plaque isolante (50), le ou chaque élément de couplage comprend un élément de crochet (54a) s'étendant à partir d'une périphérie de la surface (53d) de la plaque isolante (50) qui surplombe ladite surface, la plaque de borne (60) étant positionnée contre ladite surface (53d) et engagée avec ledit/lesdits élément(s) de crochet (54a) pour coupler la plaque de borne (60) à la surface de la plaque isolante (50), **caractérisée en ce que** le ou chaque élément de crochet (54a) est élastique et présente une surface supérieure qui s'étend à un angle par rapport à la surface de la plaque isolante (50) de sorte que le crochet (54f) se déforme vers l'extérieur en réponse à l'application d'une pression de la plaque de borne (60) contre ladite surface supérieure de manière à ce que la plaque de borne est encliquetée dans l'élément de crochet (54a).

2. Batterie rechargeable selon la revendication 1, dans laquelle la plaque isolante comprend une paroi périphérique s'étendant à partir de sa surface pour former un évidement, la plaque de borne étant dimensionnée de sorte qu'elle s'insère dans ledit évidement et soit entourée par ladite paroi périphérique.

3. Batterie rechargeable selon la revendication 2, dans laquelle le ou chaque élément de crochet s'étend à partir de ladite paroi périphérique.

4. Batterie rechargeable selon la revendication 2 ou la revendication 3, dans laquelle la plaque isolante est généralement rectangulaire et est définie par deux côtés courts parallèles et par deux côtés longs parallèles.

5. Batterie rechargeable selon la revendication 4, dans laquelle au moins un élément de crochet s'étend à partir de l'un des côtés courts parallèles.

6. Batterie rechargeable selon la revendication 4 ou 5, dans laquelle au moins un élément de crochet s'étend à partir de chacun des côtés longs parallèles.

7. Batterie rechargeable selon la revendication 5 ou la revendication 6, dans laquelle la plaque isolante comporte un trou adjacent à l'un des côtés courts parallèles pour recevoir une borne d'électrode à travers celui-ci et le ou chaque élément de crochet s'étend à partir de l'autre côté court parallèle et/ou de l'un ou des deux côtés longs parallèles espacés dudit trou.

8. Batterie rechargeable selon l'une des revendications 2 à 7, dans laquelle la paroi périphérique s'étend à partir d'une partie de la surface de la plaque isolante.

9. Batterie rechargeable selon la revendication 8, lorsqu'elle dépend de la revendication 4, dans laquelle la paroi périphérique s'étend seulement à partir des deux côtés courts parallèles de la plaque isolante ou à partir des deux côtés longs parallèles de la plaque isolante.

10. Batterie rechargeable selon l'une des revendications 2 à 9, dans laquelle le ou chaque élément de crochet surplombe la surface de la plaque isolante de manière à former une rainure de guidage qui reçoit la plaque de borne.

11. Batterie rechargeable selon l'une des revendications précédentes, comprenant un ensemble d'électrodes comportant une paire de languettes d'électrodes, l'une desdites languettes étant connectée électriquement à ladite plaque de borne couplée à ladite plaque isolante, l'ensemble formant capuchon comportant une borne d'électrode qui s'étend à travers une ouverture dans la plaque de borne, la plaque isolante et la plaque de capuchon de sorte que la plaque de borne connecte électriquement la languette d'électrode à la borne d'électrode.

12. Batterie rechargeable selon la revendication 11, comportant un joint isolant permettant d'isoler la borne d'électrode de la plaque de capuchon.

13. Batterie rechargeable selon l'une des revendications précédentes, dans laquelle un évidement est formé dans la périphérie de la plaque de borne correspondant à la position d'un élément de crochet de sorte que l'élément de crochet s'engage dans ledit évidement lorsque la plaque de borne est couplée à ladite plaque isolante.
